# EUROPÄISCHE PATENTSCHRIFT

(11) **EP 2 862 766 B1**
(45) Veröffentlichungstag und Bekanntmachung des Hinweises auf die Patenterteilung: **30.08.2017**
(21) Anmeldenummer: 14003322.6
(22) Anmeldetag: 25.09.2014
(51) Int. Cl.: B60W 30/09, B60W 30/095

(54) **Verfahren zum Betrieb eines Sicherheitssystems eines Kraftfahrzeugs und Kraftfahrzeug**
Method for operating a safety system of a motor vehicle and motor vehicle
Procédé de fonctionnement d'un système de sécurité d'un véhicule automobile et véhicule automobile

(30) Priorität: 02.10.2013 DE 102013016422
(43) Veröffentlichungstag der Anmeldung: 22.04.2015
(73) Patentinhaber: AUDI AG, 85045 Ingolstadt (DE)
(72) Erfinder: Siegel, Andreas, 85049 Ingolstadt (DE)
(74) Vertreter: Thielmann, Frank

(56) Entgegenhaltungen:
- EP-A2- 1 990 250
- WO-A1-2012/119595
- DE-A1-102012 203 182

## Beschreibung

Die Erfindung betrifft ein Verfahren zum Betrieb eines Sicherheitssystems eines Kraftfahrzeugs, welches bei Eintritt eines Ausweichkriteriums bezüglich eines Kollisionsobjekts zur Ermittlung und Realisierung einer Ausweichtrajektorie ausgebildet ist. Daneben betrifft die Erfindung ein Kraftfahrzeug mit einem solchen Sicherheitssystem.

Sicherheitssysteme für Kraftfahrzeuge, die bei einer Kollisionsgefahr mit einem Kollisionsobjekt eingreifen, beispielsweise also bei Überschreitung einer Kollisionswahrscheinlichkeit durch einen Grenzwert, sind im Stand der Technik bereits bekannt. Bereits in Serie verfügbar sind sogenannte Notbremssysteme, die einen Stillstand vor der Kollision mit dem Objekt oder zumindest eine Kollisionsfolgenminderung anstreben. Vorgeschlagen wurden inzwischen jedoch auch Notausweichsysteme, die eine Ausweichtrajektorie, mit der das Kraftfahrzeug das Kollisionsobjekt umfährt, ermitteln und durch Ansteuerung entsprechender Aktoren, insbesondere von Lenkaktoren, realisieren. Dabei kann ein den Grenzkriterien des Notbremssystems entsprechendes Ausweichkriterium verwendet werden, beispielsweise also die Überschreitung eines Grenzwerts durch die Kollisionswahrscheinlichkeit.

Erkennen bekannte Systeme ein Kollisionsobjekt (Hindernis) vor dem eigenen Kraftfahrzeug und tritt das Ausweichkriterium ein, wird ermittelt, wie viel Querversatz notwendig ist, um die Kollision zu vermeiden. Anschließend wird eine diesen Querversatz realisierende Ausweichtrajektorie ermittelt, die beispielsweise S-förmig sein kann. Durch Ansteuerung geeigneter Aktorik im Kraftfahrzeug wird diese Ausweichtrajektorie dann realisiert. Dabei sind verschiedene mathematische Ansätze bekannt, um Ausweichtrajektorien zu berechnen. So wird beispielsweise in DE 10 2005 003 274 A1 als Ausgangspunkt eine Kreisbahn vorgeschlagen, in DE 10 2006 034 254 A1 als Ausgangspunkt Klothoiden oder Sigmoiden und in DE 10 2008 016 377 A1 ein sinusartiger Verlauf.

Diese Ansätze zur Ermittlung von Ausweichtrajektorien haben jedoch Nachteile. So sind diese idealisierten Ausweichtrajektorien in der Realität aufgrund der Trägheit des Kraftfahrzeugs und der dynamischen Einschränkung häufig nicht fahrbar. Ferner gilt, dass bei diesen symmetrischen Trajektorienformen bei Ausweichvorgängen in Kurven oder bei gebremsten Ausweichversuchen Nutzen verschenkt wird.

DE 10 2011 081 159 A1 offenbart eine Möglichkeit zum Bestimmen zumindest eines optimalen Trajektorienabschnitts für das Ausweichmanöver eines Kraftfahrzeugs, wobei ein nichtlineares Programm verwendet wird. Dieses umfasst ein zeitdiskretes oder zeitkontinuierliches dynamisches Fahrzeugmodell, wobei der Trajektorienabschnitt mittels eines nicht linearen Optimierers optimiert wird und Optimierungskriterien wie Komfort, geringer Stellaufwand, geringes Risiko für den Fahrer und dergleichen berücksichtigt werden können. Randbedingungen können ebenso berücksichtigt werden.

Das dort beschriebene Verfahren hat den Nachteil, dass grundsätzlich alle Möglichkeiten im Optimierungsverfahren berücksichtigt werden und so eine äußerst zeitaufwendige Optimierung entsteht, die im praktischen Einsatz keine zeitnahe Ermittlung einer Ausweichtrajektorie ermöglicht.

DE 10 2012 203 182 A1 offenbart ein Verfahren gemäß des Oberbegriffs des Anspruchs 1.

Der Erfindung liegt daher die Aufgabe zugrunde, eine Möglichkeit zur Bestimmung einer Ausweichtrajektorie anzugeben, die trotz geringer Berechnungszeiten fahrbare, auf die aktuelle Situation abgestellte Ausweichtrajektorien liefert.

Zur Lösung dieser Aufgabe ist bei einem Verfahren der eingangs genannten Art erfindungsgemäß vorgesehen, dass zur Ermittlung der Ausweichtrajektorie ein durch Zeitpunkte beschreibende Verlaufsparameter parametrisierter vorgegebener Lenkwinkeländerungsgeschwindigkeitsverlauf und vorgegebene, die maximal realisierbare Dynamik eines genutzten Lenkaktors beschreibende Aktordynamikparameter verwendet werden, woraus in Abhängigkeit wenigstens eines situationsabhängigen Anpassungsparameters die in der Situation einzusetzende Ausweichtrajektorie durch Ermittlung geeigneter Verlaufsparameter bestimmt wird.

Die Idee der vorliegenden Erfindung ist es also, eine Grundform einer Trajektorie als Lenkwinkeländerungsgeschwindigkeitsverlauf vorzugeben. Dieser ist durch verschiedene Zeitpunkte charakterisiert, die als Verlaufsparameter auf die konkrete Situation anpassbar sind. Das Verhalten zwischen den Zeitpunkten wird durch die Aktordynamikparameter festgelegt, beispielsweise eine maximal mögliche Lenkwinkeländerungsbeschleunigung und eine maximal und minimal mögliche Lenkwinkeländerungsgeschwindigkeit. Nachdem der Ausweichvorgang immer möglichst schnell durchgeführt werden soll, legen beispielsweise solche Eigenschaften des Lenkaktors, die dessen maximale Belastbarkeit anzeigen, fest, wie steile Steigungen vorliegen können und welche Maximal- und Minimalwerte für die Lenkwinkeländerungsgeschwindigkeit möglich sind. Wird beispielsweise eine S-förmige Ausweichtrajektorie angestrebt, bei der das Kraftfahrzeug aus seiner aktuellen Starttrajektorie um einen Querversatz herausgelenkt wird und dann auf einer Paralleltrajektorie weiterfahren soll, wird zu einer Startzeit der Ausweichtrajektorie im Lenkwinkeländerungsgeschwindigkeitsverlauf zunächst so schnell wie möglich auf die maximale Lenkwinkeländerungsgeschwindigkeit beschleunigt und diese für einen bestimmten Zeitraum gehalten, dessen Länge durch wenigstens einen ersten Verlaufsparameter definiert wird. Dieser ergibt sich insbesondere durch einen maximal erlaubten Lenkwinkel. Ist dieser nämlich erreicht, wird die Lenkwinkeländerungsgeschwindigkeit (schnellstmöglich) wieder auf null reduziert, wo sie verharrt, so dass der maximal erlaubte Lenkwinkel gehalten wird. Auch dieser Zeitraum wird durch einen Verlaufsparameter definiert, ehe in die Gegenrichtung gelenkt wird Dies geschieht wiederum schnellstmöglich, so dass möglichst schnell das negative der maximalen Lenkwinkeländerungsgeschwindigkeit, also die minimale Lenkwinkeländerungsgeschwindigkeit, erreicht wird, wobei die Dauer, in der diese gehalten wird - ein weiterer Verlaufsparameter - beispielsweise durch einen minimalen zulässigen Lenkwinkel beschrieben werden kann. Dieser minimal zulässige Lenkwinkel wird dann wieder für einen durch einen Verlaufsparameter in seiner Länge bestimmten Zeitraum gehalten, ehe in eine Richtung zurückgelenkt wird, die im Wesentlichen parallel zur ursprünglichen Fahrtrichtung vor der Ausweichtrajektorie liegt. Dabei wird darauf hingewiesen, dass es, insbesondere bei sehr kleinen gewünschten Querversätzen, durchaus denkbar ist, dass die maximale Lenkwinkeländerungsgeschwindigkeit nicht erreicht werden muss, sondern schon früher wieder zurückgelenkt wird, um kleinere Lenkwinkel zu realisieren. Selbstverständlich sind grundsätzlich auch andere Ausweichtrajektorienformen als diese jedoch besonders bevorzugte S-förmige Ausweichtrajektorie denkbar.

Wie das Beispiel der S-förmigen Ausweichtrajektorie gezeigt hat, werden durch die Berücksichtigung der Aktordynamik viele Parameter einer bestimmten Ausweichtrajektorienform, die hier bereits unmittelbar durch Anforderungen an den Lenkaktor beschrieben wird, bereits festgelegt, so dass die Zahl der insbesondere durch Optimierung zu bestimmenden Verlaufsparameter deutlich reduziert ist, im obigen Beispiel auf vier. Die Tatsache, dass die begrenzte Dynamik der Lenkaktorik berücksichtigt wird, führt dazu, dass eine möglichst realistische, in jedem Fall fahrbare Trajektorie erhalten wird. Dazu wird also in anderen Worten ein möglichst realistischer, einen konkreten Lenkwinkelverlauf definierender Lenkwinkeländerungsgeschwindigkeitsverlauf erzeugt, wobei berücksichtigt wird, dass der Lenkaktor, beispielsweise ein das Lenkrad drehender Aktor, nur mit einer begrenzten, maximalen Winkelgeschwindigkeit gedreht werden kann und auch auf diese maximale Drehrate erst mit einer begrenzten maximalen Winkelbeschleunigung beschleunigt werden muss. Durch die erfindungsgemäß mögliche Reduzierung von Verlaufsparametern kann eine Optimierung viel schneller und effizienter durchgeführt werden, insbesondere beim Auftreten einer kritischen Situation erst erfolgen. Ein weiterer Vorteil des erfindungsgemäßen Ansatzes ist, dass unmittelbar auf den Größen gearbeitet wird, die als Eingangsgrößen für den Lenkaktor benötigt werden, so dass eine umständliche Rückrechnung entfällt.

Wie bereits angedeutet wurde, sieht eine besonders vorteilhafte Ausgestaltung der vorliegenden Erfindung vor, dass als wenigstens ein Anpassungsparameter ein maximal zulässiger Lenkwinkel und/oder ein minimal zulässiger Lenkwinkel und/oder wenigstens ein einen maximal zulässigen Lenkwinkel und einen minimal zulässigen Lenkwinkel beschreibender Anpassungsparameter, insbesondere eine aktuelle Geschwindigkeit und/oder ein Fahrbahnzustand, und/oder eine maximal zulässige Querbeschleunigung verwendet werden. Solche extremal zulässigen Lenkwinkel (wobei der maximal zulässige Lenkwinkel nicht zwangsläufig dem negativen des minimal zulässigen Lenkwinkels entsprechen muss) können sich aus der maximalen Querbeschleunigung ergeben, die beim Abfahren der Ausweichtrajektorie auftreten soll. Dabei soll mithin das Kraftfahrzeug grundsätzlich innerhalb des physikalischen Grenzbereichs gehalten werden, so dass die Kontrolle über das Kraftfahrzeug in jedem Fall erhalten bleibt. Wesentlich hierfür ist die aktuelle Geschwindigkeit des Kraftfahrzeugs, die als Anpassungsparameter, aus der die maximal und minimal zulässigen Lenkwinkel abgeleitet werden, verwendet werden kann; die Querbeschleunigung kann jedoch auch beispielsweise durch eine schlechtere Bodenhaftung der Reifen bei nasser Fahrbahn oder sonstige schlechte Fahrbahnzustände begrenzt werden, weshalb auch den Fahrbahnzustand beschreibende Größen als Anpassungsparameter, aus denen maximale und minimale zulässige Lenkwinkel abgeleitet werdenund/ oder die maximal zulässige Querbeschleunigung angepasst werden können, berücksichtigt werden können. Möglich ist es aber im Übrigen auch, einen maximal zulässigen Lenkwinkel und einen minimal zulässigen Lenkwinkel unmittelbar als Anpassungsparameter vorzugeben. Dabei ist anzumerken, dass, da mit der letztendlichen Ausweichtrajektorie ja auch die endgültige Querdynamik noch nicht bekannt ist, es durchaus möglich (und bevorzugt ist), zunächst von einer groben Abschätzung oder globalen Beschränkungen für das Kraftfahrzeug auszugehen, wonach die tatsächliche Querdynamik (und mithin die tatsächlich möglichen maximalen und minimalen Lenkwinkel) iterativ in einem noch zu diskutierenden Optimierungsverfahren bestimmt werden. In einem solchen Fall bilden oder definieren die hier genannten extremal zulässigen Lenkwinkel also den Ausgangspunkt für eine Optimierung, in der die maximal zulässige Querbeschleunigung eingehalten werden soll.

Der maximal und/oder minimal zulässige Lenkwinkel können bevorzugt in Abhängigkeit der maximal zulässigen Querbeschleunigung ermittelt werden. Auf diese Weise kann im Übrigen auch berücksichtigt werden, ob während der Ausführung der Ausweichtrajektorie gebremst werden soll, mithin auch ein Bremsprofil vorgesehen ist. Bei Vorsehen eines Bremsvorgangs bei Ausführung der Ausweichtrajektorie kann die Ermittlung einer zulässigen Querbeschleunigung mittels eines Kammschen Kreises erfolgen, wobei darauf hingewiesen sei, dass nicht zwangsläufig der physikalische Grenzbereich des Kraftfahrzeugs maximal ausgenutzt werden muss, sondern auch beispielsweise nur 80 % desselben ausgenutzt werden können. Berechnungen mit dem Kammschen Kreis sind grundsätzlich bekannt und sollen hier nicht im Detail dargelegt werden. Die extremal zulässigen Lenkwinkel können sich dann beispielsweise aus einer statischen Lösung (Annahme einer konstanten Kurvenfahrt mit der aktuellen Geschwindigkeit und der gewünschten (vorgegebenen maximal zulässigen) Querbeschleunigung) ergeben. Die statische Näherung ist für den Ausweichfall, der eher dynamisch ist und in dem Trägheitseffekte eine größere Rolle spielen, eher grob, weshalb sich die Anpassung der extremal zulässigen Lenkwinkel in dem Optimierungsverfahren anbietet, für welches aber ein guter Ausgangspunkt gegeben ist.

Eine besonders zweckmäßige Ausgestaltung der Erfindung sieht vor, dass bei Vorsehen eines Bremsvorgangs bei Ausführung der Ausweichtrajektorie der später im Verlauf der Ausweichtrajektorie erreichte zulässige Lenkwinkel betragsmäßig höher als der früher im Verlauf der Ausweichtrajektorie erreichte zulässige Lenkwinkel gewählt wird. Bei gebremsten Ausweichmanövern liegt durch den Bremsvorgang zum Zeitpunkt des Zurücklenkens eine niedrigere Geschwindigkeit vor als zur Startzeit der Ausweichtrajektorie, so dass mithin eine geringere Querdynamik gegeben ist. Um den maximalen Nutzen zu erzielen, kann deswegen der Betrag des später erreichten extremal zulässigen Lenkwinkels höher angesetzt werden als der Betrag des zuerst erreichten extremal zulässigen Lenkwinkels. Konkret ist die Reihenfolge, in der der maximal zulässige Lenkwinkel und der minimal zulässige Lenkwinkel erreicht werden, von der Richtung des Ausweichens abhängig. So wird beim Ausweichen nach links üblicherweise zunächst der maximal zulässige Lenkwinkel erreicht, beim Ausweichen nach rechts der minimal zulässige Lenkwinkel. Entsprechend wird der jeweils andere extremal zulässige Lenkwinkel später erreicht und kann bei Vorsehen eines Bremsvorgangs entsprechend höher gewählt werden.

Wie bereits dargelegt wurde, kann eine S-förmige Ausweichtrajektorie durch den Lenkwinkeländerungsgeschwindigkeitsverlauf beschrieben werden, indem in Abhängigkeit der Ausweichrichtung erst maximal schnell in die eine Richtung gelenkt wird, dort ein Extremalwinkel gehalten wird, dann möglichst schnell in die andere Richtung gelenkt wird, dort ein anderer Extremalwinkel gehalten wird und zurückgelenkt wird auf den Endlenkwinkel, wobei wenigstens ein Teil der Verlaufsparameter so gewählt werden, dass die Extremalwinkel den maximal und minimal zulässigen Lenkwinkeln entsprechen. Geht man mit anderen Worten davon aus, dass möglichst schnell eine maximale Winkeländerungsgeschwindigkeit eingestellt wird, wird der Verlaufsparameter, der den Zeitraum angibt, in dem diese maximale Lenkwinkeländerungsgeschwindigkeit gehalten wird, durch den entsprechenden extremal zulässigen Lenkwinkel definiert. Dies gilt entsprechend beim Zurücklenken. Im bereits angesprochenen Optimierungsverfahren können sich die extremalen Lenkwinkel selbstverständlich auch von Schritt zu Schritt verändern.

Allgemein kann vorgesehen sein, dass als wenigstens ein Anpassungsparameter ein eine in der Situation vorliegende Kurvenfahrt beschreibender Kurvenfahrtparameter verwendet wird, insbesondere ein einen Kurvenradius und/oder einen Startlenkwinkel und/oder einen Endlenkwinkel beschreibender Parameter. Zweckmäßig lässt sich das erfindungsgemäße Verfahren auch in einer Kurvenfahrt anwenden, in der mithin ein bereits bestimmter Lenkwinkel gegeben ist, bevor die Ausweichtrajektorie durchgeführt wird. Auf diese Weise, wie auch bei der bereits diskutierten Berücksichtigung eines Bremsvorgangs auf die extremal zulässigen Lenkwinkel, können sich mithin im Rahmen der vorliegenden Erfindung auch nicht symmetrische Trajektorien ergeben, die explizit die Tatsache, dass eine Kurvenfahrt durchgeführt wird und ein Ausweichen nach außen in der Kurve einfacher möglich sein könnte, berücksichtigen und ausnutzen. Mit anderen Worten kann beispielsweise ein Anfangslenkwinkel berücksichtigt werden, wobei sich beispielsweise als Zielwinkel am Ende der Ausweichtrajektorie ein Endlenkwinkel ergeben kann, der dem neuen Kurvenradius (Anfangskurvenradius + Querversatz) entspricht. Selbstverständlich haben derartige Anfangslenkwinkel bzw. Endlenkwinkel auch Auswirkungen auf die konkrete Gestalt des Lenkwinkeländerungsgeschwindigkeitsverlaufs, da bei einem vorgegebenen Anfangslenkwinkel länger und/oder kürzer umgelenkt werden muss, um einen maximal zulässigen Lenkwinkel zu erreichen und dergleichen.

Zweckmäßigerweise kann ferner wenigsten ein Anpassungsparameter, insbesondere ein gewünschter Querversatz durch die Ausweichtrajektorie, in Abhängigkeit von die relative Position des Objekts zu dem Kraftfahrzeug und/oder die Ausdehnung des Objekts beschreibenden Umfelddaten ermittelt werden. Bei diesem Anpassungsparameter handelt es sich mithin um die Vorgabe, die ein unfallfreies Passieren des Kollisionsobjekts ermöglichen soll und die meist durch einen Querversatz beschrieben wird. Aus Umfelddaten, die auch in die Auswertung des Ausweichkriteriums eingehen, ist die relative Position des Kollisionsobjekts zu dem Kraftfahrzeug und die Ausdehnung des Kollisionsobjekts bereits bekannt, so dass, beispielsweise unter Vorgabe eines Mindestabstands und dergleichen, ein Querversatz berechnet werden kann, der benötigt wird.

Dies ist im Stand der Technik grundsätzlich bekannt und muss daher hier nicht näher dargelegt werden.

Eine vorteilhafte Weiterbildung des erfindungsgemäßen Verfahrens sieht vor, dass zur Ermittlung der geeigneten Verlaufsparameter, insbesondere im Rahmen eines Optimierungsverfahrens, für verschiedene Testwerte von Verlaufsparametern unter Verwendung eines Fahrdynamikmodells Testtrajektorien aus dem Lenkwinkeländerungsgeschwindigkeitsverlauf ermittelt und anhand wenigstens eines Eignungskriteriums bewertet werden. Dabei sind letztlich insbesondere alle Verlaufsparameter geeignet, die zu fahrende Ausweichtrajektorie zu beschreiben, die alle Eignungskriterien erfüllen, wobei die Bewertung auch differenzierter erfolgen kann, insbesondere ein Grad der Einhaltung des wenigstens einen Eignungskriteriums ermittelt wird. Im Beispiel der im Wesentlichen S-förmigen Trajektorie kann gesagt werden, dass ein maximal zulässiger Lenkwinkel zu der Seite, zu der ausgewichen werden soll, hin und die Dauer des Zeitraums, für den dieser gehalten wird, dafür verantwortlich sind, einen gewissen Querversatz zu erreichen. Der maximal zulässige Lenkwinkel beim Zurücklenken und der Zeitraum, für den dieser gehalten wird, bestimmen das Zurücklenken in eine parallele Ausrichtung des Kraftfahrzeugs zur ursprünglichen Fahrzeugtrajektorie. Für verschiedene Werte von Verlaufsparametern (bzw. diese bestimmenden Anpassungsparametern wie extremal zulässigen Lenkwinkeln) lassen sich mithin Lenkwinkeländerungsgeschwindigkeitsverläufe und daraus Lenkwinkelverläufe generieren, die dann dafür geeignet sind, gemeinsam mit dem aktuellen fahrdynamischen Zustand des Kraftfahrzeugs (gegebenenfalls inklusive eines gewünschten Geschwindigkeitsverlaufs) mittels eines geeigneten Fahrdynamikmodells, die zu erwartende Testtrajektorie für die Testwerte zu berechnen. Im Beispiel der S-förmigen Ausweichtrajektorie kann eine derartige Trajekorienberechnung mit verschiedenen Kombinationen von Zeitdauern, für die die extremal zulässigen Lenkwinkel gehalten werden sollen sowie extremal zulässigen Lenkwinkeln durchgeführt werden, so dass man eine Schar von fahrbaren Ausweichtrajektorien erhält, die dann entsprechend der gewünschten Kriterien (insbesondere erreichter Querversatz und Parallelität) bewertet werden müssen.

Aus diesen Ausführungen ergibt sich bereits, dass vorgesehen sein kann, dass wenigstens ein Teil der Anpassungsparameter und/oder daraus abgeleiteter Parameter, aus denen Verlaufsparameter berechnet werden, zur Erzeugung unterschiedlicher Testwerte variiert werden können. Dies können beispielsweise die maximal und minimal zulässigen Lenkwinkel sein, aus denen sich Verlaufsparameter unmittelbar ergeben, und die dann anhand der im Fahrdynamikmodell ermittelten, tatsächlichen Querdynamik der Testtrajektorie angepasst werden können, so dass ein iteratives Vorgehen gegeben ist. Anpassungsparameter, die das zu erreichende Ergebnis - insbesondere also den gewünschten Querversatz und/oder die gewünschte Fahrtrichtung am Ende der Ausweichtrajektorie - definieren, gehen meist in die Eignungskriterien ein, so dass vorgesehen sein kann, dass wenigstens ein Eignungskriterium das Einhalten wenigstens eines Anpassungsparameters betrifft. Insgesamt wird es in vielen Ausführungsbeispielen also so sein, dass ein Teil der Anpassungsparameter zur unmittelbaren Ermittlung von Verlaufsparametern genutzt werden können (und optional variiert werden können, um verschiedene Testwerte der berechenbaren Verlaufsparameter zu ermitteln), andere Anpassungsparameter jedoch in die Eignungskriterien eingehen. Doch auch bezüglich der Querdynamik kann ein Eignungskriterium gegeben sein, dass beispielsweise eine maximal zulässige Querbeschleunigung nicht überschritten wird. Anpassungsparameter zur zulässigen Querdynamik können also eine Art "Doppelrolle" spielen: Zum einen kann mit ihrer Hilfe, beispielsweise wie erwähnt unter Verwendung des statischen Einspurmodells, eine erste Grobabschätzung von Testwerten oder Testwerten bestimmenden Parametern, hier den extremal zulässigen Lenkwinkeln, bei Initialisierung des Optimierungsverfahrens erfolgen, zum anderen kann ihre Einhaltung jedoch auch ein Eignungskriterium bilden.

Als weiteres Eignungskriterium bietet es sich an, insbesondere bei Durchführung eines Optimierungsverfahrens, eine möglichst schnelle Ausweichtrajektorie anzustreben. Dabei ist es durchaus denkbar, dass die Geschwindigkeit als eine zurückgelegte Fahrtstrecke beschrieben werden kann, beispielsweise dann, wenn ein Vergleich mit dem Abstand zum Objekt erfolgen soll. Wie bereits angedeutet, sind zweckmäßig einsetzbare Eignungskriterien das Erreichen eines gewünschten Querversatzes und/oder eine größtmögliche Parallelität des Endes der Ausweichtrajektorie zu Beginn der Ausweichtrajektorie und/oder das Erreichen eines bestimmten Endlenkwinkels am Ende der Ausweichtrajektorie, insbesondere bei einer Kurvenfahrt. In dem bereits diskutierten Beispiel, bei dem eine insbesondere S-förmige, einen maximal oder einen minimal zulässigen Lenkwinkel für einen Zeitraum haltende Ausweichtrajektorie verwendet wird, können mithin die die Länge der Zeiträume definierenden Verlaufsparameter zum Einhalten eines in Abhängigkeit von die relative Position des Objekts zu dem Kraftfahrzeug und/oder die Ausdehnung des Objekts beschreibenden Umfelddaten ermittelten Anpassungsparameters und eines Parallelitätskriteriums bestimmt werden, wie oben bereits dargelegt wurde.

Vorzugsweise kann als Fahrdynamikmodell ein Einspur- oder ein Zweispur-Fahrdynamikmodell verwendet werden. Diese Modelle sind äußerst einfach und schnell berechenbar und ermöglichen es, von einem bestimmten Lenkwinkeländerungsgeschwindigkeitsverlauf auf eine konkrete Trajektorie im Ortsraum zu schließen, indem die Trajektorie schrittweise durchgerechnet wird, nachdem Fahrdynamikmodelle meist als Differentialgleichungen realisiert sind. Dabei sei an dieser Stelle nochmals darauf hingewiesen, dass diese Fahrdynamikmodelle selbstverständlich von einer bestimmten fahrdynamischen Zustandsbeschreibung des Kraftfahrzeugs ausgehen, insbesondere einem Geschwindigkeitsverlauf, der sich beispielsweise aus einem während der Durchführung der Ausweichtrajektorie erfolgenden Bremsvorgang ergeben kann oder aber einfach das konstante Einhalten der Startgeschwindigkeit betreffen kann. Derart einfache, schnell zu berechnende Modelle können im Rahmen der vorliegenden Erfindung eingesetzt werden, da bereits von einer bestimmten Trajektorienform ausgegangen wird und nur wenige Parameter zu optimieren sind, so dass auf eine hochgenaue Berechnung weitgehend verzichtet werden kann. Nichtsdestotrotz sei darauf hingewiesen, dass, wenn mehr Zeit gespart werden soll, wie grundsätzlich bekannt, auch Trajektorienverläufe im Ortsraum vorberechnet und in einer Look-Up-Tabelle abgespeichert werden können. Denkbar ist es zudem, Trajektorienverläufe durch Polynome anzunähern und dann statt einer schrittweisen Berechnung für spätere Vorgänge diese Polynome zu verwenden. Es hat sich jedoch gezeigt, dass im erfindungsgemäßen Verfahren auch eine Berechnung der Testtrajektorien auf herkömmliche Art schrittweise in Echtzeit problemlos möglich ist.

Wie bereits erwähnt, bieten sich zum Erreichen bestimmter gewünschter Eignungskriterien besonders Optimierungsverfahren an. Dabei wird bevorzugt ein iteratives Optimierungsverfahren bezüglich des wenigstens einen Eignungskriteriums zur Ermittlung der geeigneten Verlaufsparameter durchgeführt, insbesondere eine binäre Suche und/oder ein Newton-Verfahren. Derartige, hier besonders vorteilhaft einsetzbare Optimierungsverfahren sind im Stand der Technik grundsätzlich bereits bekannt. Dabei ist es zweckmäßig, wenn zur Initialisierung des Optimierungsverfahrens ein maximal zulässiger Lenkwinkel und/oder ein minimal zulässiger Lenkwinkel aus der statischen Lösung des Fahrdynamikmodells bei der vorgegebenen maximalen Querbeschleunigung als Anpassungsparameter gewonnen werden. Auf diese Weise wird ein besonders guter Ausgangspunkt des Optimierungsverfahrens erhalten. Im Fahrdynamikmodell ergeben sich dann für die Testtrajektorien vorliegende Querdynamiken, aus denen aktualisierte maximale und minimal zulässige Lenkwinkel folgen.

Wie bereits erwähnt, kann als Optimierungsziel auch eine möglichst schnelle Durchführbarkeit der Ausweichtrajektorie vorgesehen sein. Auch allgemein gilt jedoch, dass, falls die durch die geeigneten Verlaufsparameter beschriebene Trajektorie auch zu einer späteren Startzeit als der aktuellen Zeit in der Situation noch ein erfolgreiches Ausweichen gewährleistet, eine Neuberechnung einer Ausweichtrajektorie mit zu einem komfortableren Ausweichen modifizierten Aktordynamikparametern durchgeführt wird. Wird mithin festgestellt, dass ein bestimmter zeitlicher Puffer noch existiert, der auch durch Abstände beschrieben werden kann, ist es möglich, die Ausweichtrajektorie unter Modifizierung der Aktordynamikparameter grundsätzlich komfortabler zu gestalten. Beispielsweise können unter diesen Umständen die Aktordynamikparameter selbst noch als Optimierungsparameter in das Optimierungsverfahren eingehen. Alternativ ist es im Übrigen auch denkbar, zumindest für einen Teil der noch zur Verfügung stehenden Zeit keinerlei Eingriffe vorzunehmen, mithin die Ausweichtrajektorie noch zu verzögern, so dass der Fahrer selbst gegebenenfalls noch ein Ausweichmanöver einleiten kann.

Vorzugsweise weist die Ausweichtrajektorie einen einen Endlenkwinkel über einen Zeitraum haltenden Endabschnitt auf. Das bedeutet, der Lenkwinkeländerungsgeschwindigkeitsverlauf enthält an seinem Ende noch einen Zeitraum, in dem die Lenkwinkeländerungsgeschwindigkeit bei Null gehalten wird. Auf diese Weise wird auch der Endlenkwinkel gehalten, so dass die Ausrichtung des Kraftfahrzeugs stabilisiert wird und ein Überschwingen vermieden wird.

Eine denkbare weitere Ausgestaltung des erfindungsgemäßen Verfahrens sieht vor, dass eine Mehrzahl von Ausweichtrajektorien beschreibenden Verlaufsparametern für Anpassungsparameter bestimmter Situationen vorausberechnet und gespeichert werden, wobei bei Eintritt des Ausweichkritierums Verlaufsparameter für die der aktuellen Situation zugeordneten Anpassungsparameter aus den gespeicherten Verlaufsparametern ermittelt werden. Es ist mithin denkbar, für eine Vielzahl von möglichen Situationen, die durch mögliche Anpassungsparameter beschrieben sind, Vorausberechnungen durchzuführen und deren Ergebnisse in einer entsprechenden Speichereinrichtung den Anpassungsparametern zugeordnet abzulegen, beispielsweise in einer Look-Up-Tabelle. Tritt dann eine tatsächliche kritische Situation auf, können beispielsweise die am besten passenden Verlaufsparameter für die die aktuelle Situation beschreibenden Anpassungsparameter aus der Speichereinrichtung, insbesondere der Look-Up-Tabelle, abgerufen werden oder es kann eine Interpolation durchgeführt werden, um den Berechnungsaufwand in der tatsächlichen kritischen Situation weiter zu reduzieren. Es hat sich jedoch gezeigt, dass es das erfindungsgemäße Verfahren durchaus ermöglicht, für die aktuellen Anpassungsparameter speziell in der Situation in Echtzeit Verlaufsparameter und somit eine Ausweichtrajektorie zu bestimmen, die idealerweise eine Kollision mit dem Kollisionsobjekt vermeidet, so dass ein derartiges Vorgehen nicht zwangsläufig notwendig ist.

Wie bereits erwähnt wurde, ist es einer der Vorteile der vorliegenden Erfindung, dass zur Realisierung der Ausweichtrajektorie der Aktor gemäß dem Lenkwinkeländerungsgeschwindigkeitsverlauf oder einem daraus abgeleiteten Lenkwinkelverlauf angesteuert wird. Die Verlaufsparameter bilden also unmittelbar die Grundlage für die folgende Ansteuerung zur Realisierung der Ausweichtrajektorie.

Als Aktordynamikparameter können zweckmäßigerweise eine maximale Lenkwinkeländerungsgeschwindigkeit und eine maximale Lenkwinkeländerungsbeschleunigung verwendet werden. Dabei können, allgemein gesagt, die Aktordynamikparameter bevorzugt aus Fahrversuchen ermittelt werden. Auch Simulationen und/oder theoretische Berechnungen bilden eine Quelle, aus der sich die Aktordynamikparameter ermitteln lassen, die letztendlich vorgegeben werden.

Eine besonders zweckmäßige Weiterbildung der Erfindung sieht vor, dass bei einem durch den Aktor drehbaren Lenkrad ein Widerstand durch am Lenkrad befindliche Hände eines Fahrers bei der Ermittlung der vorzugebenden Aktordynamikparameter berücksichtigt wird. Soll ein Lenkrad durch einen zusätzlichen Aktor drehbar sein, ist zu berücksichtigen, dass ein Fahrer das Lenkrad festhalten könnte, so dass eine zusätzliche Kraft überwunden werden muss, um das Lenkrad bezüglich der Vorgaben des den Aktor ansteuernden Steuergeräts zu verdrehen. Will man nun ein sicheres Ausweichen ermöglichen, sollten derartige Umstände bei der Ermittlung der Ausweichtrajektorie ebenso mitberücksichtigt werden, so dass entsprechende, hinter der bei unbelastetem Lenkrad vorliegenden Leistungsfähigkeit des Lenkaktors zurückbleibende Aktordynamikparameter verwendet werden. Denkbar ist es im Übrigen auch, insbesondere durch eine Messung, festzustellen, ob sich die Hände des Fahrers am Lenkrad befinden, bevor die Ausweichtrajektorie ermittelt und durchgeführt wird, wobei abhängig vom Ermittlungsergebnis Aktordynamikparameter vorgegeben werden.

Beispielsweise kann ein kurzer Lenkstoß auf das Lenkrad gegeben werden und die Reaktion vermessen werden, welche abhängig davon ist, ob der Fahrer die Hände am Lenkrad hat oder nicht.

Bei dem Lenkwinkel kann es sich um einen Radlenkwinkel oder einen Lenkradlenkwinkel handeln, wobei bevorzugt dann, wenn der Lenkaktor am Lenkrad vorgesehen ist, der Lenkradwinkel herangezogen wird, da hieraus ohne weitere nötige Umrechnung die entsprechenden Ansteuerungsparameter hergeleitet werden können. Wird das Lenkrad selbst gedreht, kann die bei Betrachtung des Lenkradlenkwinkels gegebene Lenkwinkeländerungsgeschwindigkeit auch unmittelbar als die Lenkwinkelgeschwindigkeit gesehen werden, die Lenkwinkeländerungsbeschleunigung als die Lenkwinkelbeschleunigung.

Neben dem Verfahren betrifft die vorliegende Erfindung ein Kraftfahrzeug, umfassend ein Sicherheitssystem mit einem zur Durchführung des erfindungsgemäßen Verfahrens ausgebildeten Steuergerät. Sämtliche Ausführungen zum erfindungsgemäßen Verfahren lassen sich analog auf das erfindungsgemäße Kraftfahrzeug übertragen, so dass auch mit diesem die genannten Vorteile erreicht werden können. Das Kraftfahrzeug umfasst dann ferner auch einen Lenkaktor, der beispielsweise durch das Steuergerät direkt anhand eines bestimmten Lenkwinkeländerungsgeschwindigkeitsverlaufs angesteuert werden kann. Ferner kann das Sicherheitssystem Sensordaten wenigstens eines Umgebungssensors entgegennehmen, die hinsichtlich des Ausweichkriteriums, aber auch von Anpassungsparametern für die Ermittlung der Ausweichtrajektorie ausgewertet werden können.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Verkehrssituation und eine mögliche Ausweichtrajektorie zum Umfahren eines Kollisionsobjekts,
- Fig. 2: einen Ablaufplan des erfindungsgemäßen Verfahrens,
- Fig. 3: ein erster möglicher Lenkwinkeländerungsgeschwindigkeitsverlauf,
- Fig. 4: der zu dem Lenkwinkeländerungsgeschwindigkeitsverlauf der Fig. 3 gehörige Lenkwinkelverlauf,
- Fig. 5: einen zweiten möglichen Lenkwinkeländerungsgeschwindigkeitsverlauf,
- Fig. 6: den Fig. 5 zugehörigen Lenkwinkelverlauf, und
- Fig. 7: ein erfindungsgemäßes Kraftfahrzeug.

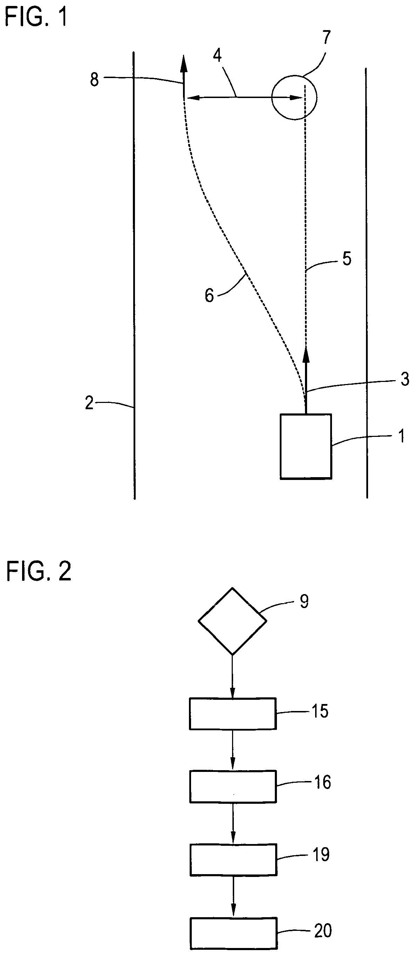

Fig. 1 zeigt eine Verkehrssituation, in der das erfindungsgemäße Verfahren, welches im Folgenden an einem Ausführungsbeispiel näher erläutert werden soll, zum Einsatz kommt. Ein erfindungsgemäßes Kraftfahrzeug 1 fährt dabei auf einer Fahrbahn 2 mit einer gewissen Geschwindigkeit in eine durch den Pfeil 3 angedeutete Richtung auf ein potenzielles Kollisionsobjekt 4 zu. Behielte das Kraftfahrzeug 1 seine Geschwindigkeit und Richtung bei, würde es gemäß der angedeuteten Kollisionstrajektorie 5 mit dem potenziellen Kollisionsobjekt 4 kollidieren. Um dies zu vermeiden, weist das Kraftfahrzeug 1 ein Sicherheitssystem auf, welches durch Umfeldsensoren aufgenommene Umfelddaten sowie Egodaten des Kraftfahrzeugs auswertet, um eine Kollisionswahrscheinlichkeit mit dem Kollisionsobjekt 4 zu ermitteln. Überschreitet diese Kollisionswahrscheinlichkeit einen Grenzwert, ist also eine Kollision ohne Fahreingriff sehr wahrscheinlich, ist ein Ausweichkriterium erfüllt und das Sicherheitssystem ermittelt eine Ausweichtrajektorie 6, welche dann durch Ansteuerung geeigneter Fahrzeugsysteme, darunter insbesondere eines Lenkaktors, realisiert wird. Die besonders schnelle, insbesondere in Echtzeit erfolgende Ermittlung einer geeigneten Ausweichtrajektorie 6 ist Gegenstand des erfindungsgemäßen Verfahrens.

Damit eine Ausweichtrajektorie 6 zur Vermeidung einer Kollision geeignet ist, muss sie rechtzeitig einen hinreichenden Querversatz 7 im Vergleich zur ursprünglichen Trajektorie 5 herstellen. Zudem ist es oft gewünscht, dass das Kraftfahrzeug zum Ende der Ausweichtrajektorie 6 hin in einer im Wesentlichen parallelen Richtung zur ursprünglichen Richtung weiterfährt, angedeutet durch den Pfeil 8, vgl. mit dem Pfeil 3. Bei Kurvenfahrten bedeutet dies, dass zum Ende der Ausweichtrajektorie 6 ein Endlenkwinkel hergestellt wird, der zum weiteren Durchfahren der Kurve geeignet ist.

Die in Fig. 1 dargestellt Verkehrssituation bzw. kritische Situation ist durch Anpassungsparameter beschreibbar, die auf eine grundsätzlich vorgegebene Trajektorienform, hier eine S-förmige Ausweichtrajektorie, angewandt werden können, um deren Verlauf so anzupassen, dass sich die geeignete Ausweichtrajektorie 6 ergibt. Anpassungsparameter betreffen dabei insbesondere die aktuelle Geschwindigkeit des Kraftfahrzeugs 1, den Fahrbahnzustand sowie die Position des Kollisionsobjekts 4 relativ zum Kraftfahrzeug 1 und die Ausdehnung des Kollisionsobjekts 4 betreffende Anpassungsparameter, die beispielsweise über den Querversatz 7, der gewünscht wird, abgebildet werden können. Bei einer Kurvenfahrt lassen sich Kurvenradien bzw. Anfangslenkwinkel und gewünschte Endlenkwinkel und/oder gewünschte Endlenkwinkel ebenso als Anpassungsparameter wiedergeben.

Wie nun unter Berücksichtigung der Anpassungsparameter und Vorgaben zur Ausweichtrajektorie und den dynamischen Möglichkeiten des Lenkaktors eine konkrete Ausweichtrajektorie 6 bestimmt werden kann, wird im Folgenden im Hinblick auf Fig. 2 und die folgenden Figuren näher beschrieben.

Dabei wird ein Ausführungsbeispiel dargestellt, in dem die Berechnung der konkreten Ausweichtrajektorie 6 in Echtzeit bei Eintritt der kritischen Situation erfolgt, wobei auch Ausführungsbeispiele denkbar sind, in denen mit vorausberechneten Ausweichtrajektorien gearbeitet wird, die beispielsweise in einem Look-Up-Table abgespeichert sein können und aus denen die konkret zu nutzende, geeignete Ausweichtrajektorie 6 bestimmt wird.

In einem Schritt 9 wurde festgestellt, dass das Ausweichkriterium erfüllt ist, das bedeutet, es wird eine geeignete Ausweichtrajektorie 6 benötigt.

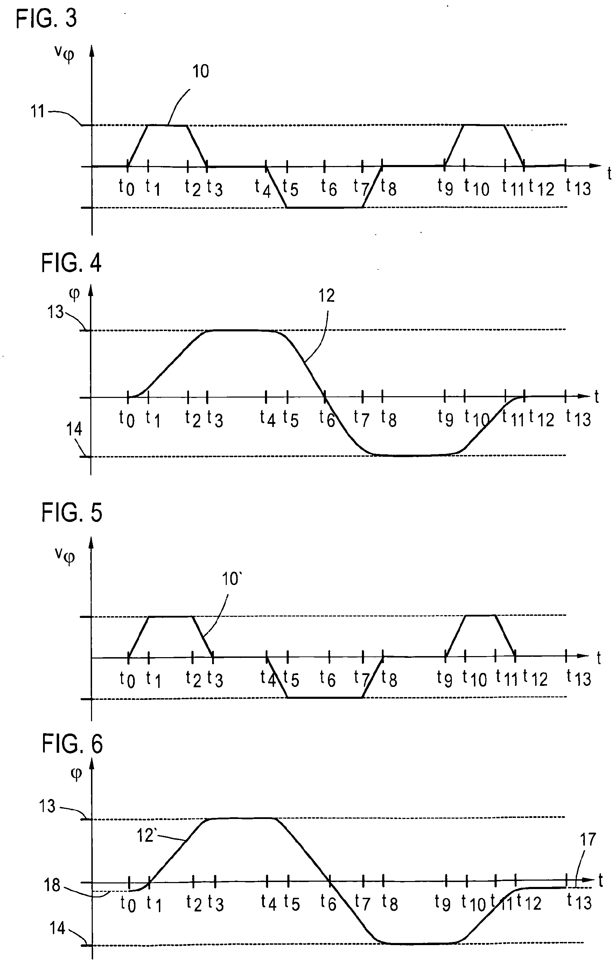

Das erfindungsgemäße Verfahren arbeitet nun mit einer vorgegebenen Trajektorienform, die vorliegend durch einen Lenkwinkeländerungsgeschwindigkeitsverlauf, wie er in einem ersten Beispiel in Fig. 3 dargestellt ist, definiert wird, zu dem zusätzlich noch die dynamischen Möglichkeiten des Lenkaktors beschreibende Aktordynamikparameter vorgegeben werden. Die Aktordynamikparameter sind vorliegend eine maximal erreichbare Lenkwinkeländerungsgeschwindigkeit und eine maximal erreichbare Lenkwinkeländerungsbeschleunigung, die für beide Lenkrichtungen gelten. Derartige Aktordynamikparameter lassen sich durch Messungen, Simulationen und/oder Berechnungen ermitteln und geben bereits, wie dargelegt werden soll, grundlegende Eigenschaften des Lenkwinkeländerungsgeschwindigkeitsverlaufs wieder.

Grundsätzlich beginnt ein Lenkwinkeländerungsgeschwindigkeitsverlauf bei einem bestimmten Startlenkwinkel und endet bei einem bestimmten Endlenkwinkel. Der Einfachheit halber wird zunächst ein Fall betrachtet, in dem der Startlenkwinkel und der Endlenkwinkel null sind, wo also beispielsweise wie in Fig. 1 dargestellt keine Kurvenfahrt vorliegt. Ersichtlich beginnt der in Fig. 3 beispielhaft dargestellte Lenkwinkeländerungsgeschwindigkeitsverlauf 10 zu einem Zeitpunkt t0. Zu diesem Zeitpunkt ist die Lenkwinkeländerungsgeschwindigkeit v_{ϕ}0. Sie steigt dann gemäß der maximal möglichen Lenkwinkeländerungsbeschleunigung bis auf die maximal mögliche Lenkwinkeländerungsgeschwindigkeit 11 an. Dabei sei an dieser Stelle noch angemerkt, dass vorliegend ein Ausweichen nach links (zunächst positive Lenkwinkel), wie in Fig. 1 beispielhaft dargestellt wurde, gezeigt wird. Wird nach rechts ausgewichen, ergibt sich der Lenkwinkeländerungsgeschwindigkeitsverlauf 10 an der Zeitachse, also der t-Achse, gespiegelt. Ob nach rechts oder links ausgewichen wird, ergibt sich wie grundsätzlich bekannt aus der Gesamtverkehrssituation und gegebenenfalls auch aus der Tatsache, ob gerade eine Kurve gefahren wird.

Die maximale Lenkwinkeländerungsgeschwindigkeit 11 wird bis zum Zeitpunkt t2 gehalten, sodann mit der maximalen Lenkwinkeländerungsbeschleunigung wieder auf null abgesenkt, Zeitpunkt t3. Zum Zeitpunkt t3 ist ein gewisser Extremalwinkel erreicht, der, wie noch dargelegt werden wird, idealerweise einem aus den Anpassungsparametern abgeleiteten maximal zulässigen Lenkwinkel entspricht. Dies wird durch Fig. 4 näher erläutert, die den aus dem Lenkwinkeländerungsgeschwindigkeitsverlauf 10 unmittelbar ableitbaren Lenkwinkelverlauf 12 zeigt, der zum Zeitpunkt t3 offensichtlich den Extremalwinkel 13 erreicht hat.

Gemäß dem Lenkwinkeländerungsgeschwindigkeitsverlauf 10 wird eine Lenkwinkeländerungsgeschwindigkeit von Null bis zum Zeitpunkt t4 gehalten, dann wird schnellstmöglich in die Gegenrichtung gelenkt, also maximale Lenkwinkeländerungsbeschleunigung bis zum Zeitpunkt t5, zu dem die minimale Lenkwinkeländerungsgeschwindigkeit (entspricht der negativen maximalen Lenkwinkeländerungsgeschwindigkeit 11) erreicht ist. Für den Lenkwinkelverlauf 12 bedeutet dies, dass der Lenkwinkel wieder abfällt, beim Zeitpunkt t6 die Zeitachse kreuzt und abhängig davon, wie lang die minimale Lenkwinkeländerungsgeschwindigkeit gehalten wird, Zeitpunkte t7 und t8, weiter abfällt bis zu einem unteren Extremalwinkel 14, der, wie später noch erläutert werden wird, auf einen minimal zulässigen Lenkwinkel eingestellt werden wird. Auch dieser wird bis zu einem Zeitpunkt t9 gehalten, wonach die Lenkwinkeländerungsgeschwindigkeit wieder ansteigt, bis zur maximalen Lenkwinkeländerungsgeschwindigkeit 11, Zeitpunkte t9 und t10, dort bis zum Zeitpunkt t11 gehalten und schnellstmöglich wieder auf Null reduziert wird, Zeitpunkt t12, derart, dass im vorliegenden Ausführungsbeispiel mit Startlenkwinkel und Endlenkwinkel Null der Endlenkwinkel Null erreicht wird. Für den Zeitpunkt von t12 bis t13 wird der Endlenkwinkel gehalten, um das Kraftfahrzeug zu stabilisieren und ein Überschwingen zu vermeiden.

Es sei an dieser Stelle noch darauf hingewiesen, dass es, wenn kleine Lenkwinkel ausreichend sind, auch denkbar ist, dass die maximale Lenkwinkeländerungsgeschwindigkeit 11 (bzw. die minimale Lenkwinkeländerungsgeschwindigkeit) gar nicht erreicht wird, sondern bereits davor zurückgelenkt wird. Dies kann bei kleinen gewünschten Querversätzen der Fall sein. Dann fallen die Zeitpunkte t1 und/oder t5 und/oder t10 weg.

Vorliegend wird ein Fall betrachtet, in dem der Lenkaktor ein das Lenkrad drehender Lenkaktor ist, so dass der dargestellte Lenkwinkel ϕ den Lenkradlenkwinkelverlauf wiedergibt. In diesem Zusammenhang kann bei der Vorgabe der Aktordynamikparameter, also der maximalen Lenkwinkeländerungsgeschwindigkeit 11 und der maximalen Lenkwinkeländerungsbeschleunigung (Steigung zwischen t0 und t1 etc.) die Tatsache berücksichtigt werden, dass der Fahrer die Hände am Lenkrad hat oder haben könnte. Dann würde ein zusätzlicher Widerstand überwunden werden müssen.

Ersichtlich ergeben sich der Zeitpunkt t1 sowie die Abstände der Zeitpunkte t2 und t3, t4 und t5, t7 und t8, t9 und t10, t11 und t12 bereits unmittelbar aus der maximalen Lenkwinkeländerungsbeschleunigung. Die Zeitpunkte t2 (unter Berücksichtigung des Integrals des Lenkwinkeländerungsgeschwindigkeitsverlaufs 10 bis t3), t4, t7 (wieder unter Berücksichtigung des vorgegebenen Zeitraums bis t8), t9 und t11 (wiederum unter Berücksichtigung des Zeitraums bis t12) sind zunächst frei wählbar, sie parametrisieren den Lenkwinkeländerungsgeschwindigkeitsverlauf 10 als Verlaufsparameter. Ziel ist es mithin für eine konkrete, durch Anpassungsparameter beschriebene Situation, beispielsweise die Verkehrssituation in Fig. 1, diese Verlaufsparameter aus den Anpassungsparametern herzuleiten, so dass in Fig. 2 in einem Schritt 15 zunächst die Anpassungsparameter bestimmt werden. Dabei handelt es sich vorliegend um die aktuelle Geschwindigkeit des Kraftfahrzeugs 1, eine den Fahrbahnzustand anzeigende Größe und den Querversatz 7. Wie bereits erwähnt wurde, kann das erfindungsgemäße Verfahren jedoch auch Startlenkwinkel und/oder Endlenkwinkel, die gewünscht werden, als Anpassungsparameter berücksichtigen, wobei sich der gewünschte Endlenkwinkel auch aus den Anfangslenkwinkel und dem durch den Querversatz 7 geänderten Kurvenradius ergeben kann. Dies ist durch den zweiten Lenkwinkeländerungsgeschwindigkeitsverlauf 10' der Fig. 5 und den entsprechenden Lenkwinkelverlauf 12' der Fig. 6 näher erläutert. Ersichtlich beginnt der Lenkwinkelverlauf 12' bei einem Startlenkwinkel 18, weil beispielsweise eine Kurve durchfahren wird. Entsprechend ist der Zeitraum von t0 bis t3 auch länger, um den Extremalwinkel 13 zu erreichen. Nachdem aufgrund des am Ende zu erreichenden Endlenkwinkels 17 jedoch weniger zurückgelenkt werden muss, ist der Zeitraum von t9 bis t12 kürzer. Der gewünschte Endlenkwinkel ergibt sich dabei als ein Lenkwinkel, der dem neuen Kurvenradius, nämlich dem Anfangskurvenradius plus dem Querversatz, entspricht. Entsprechend können auch Kurvenfahrten mittels des erfindungsgemäßen Verfahrens und geeigneter Anpassungsparameter abgebildet werden, woraus sich im Übrigen nichtsymmetrische Trajektorien ergeben können.

Anzumerken ist, dass es sich bei den Lenkwinkeländerungsgeschwindigkeitsverläufen 10 und 10' grundsätzlich um denselben vorgegebenen Basis-Lenkwinkeländerungsgeschwindigkeitsverlauf handelt, wobei in Fig. 5 und Fig. 6 lediglich die Auswirkung von zusätzlichen Anpassungsparametern gezeigt ist, nämlich dem Anfangslenkwinkel und dem Kurvenradius/Endlenkwinkel.

Aus einem Teil der genannten Anpassungsparameter lassen sich unmittelbar zumindest erste grobe Abschätzungen der Verlaufsparameter berechnen. Dies geschieht in Schritt 16. So folgt nämlich aus der aktuellen Geschwindigkeit des Kraftfahrzeugs sowie aus der Fahrbahnzustandsgröße und einer zulässigen Querbeschleunigung, welche maximal und minimal zulässigen Lenkwinkel in einer statischen Lösung (konstanten Kurvenfahrt) möglich sind, um die Kontrolle über das Kraftfahrzeug 1 zu halten, wobei hierbei üblicherweise nicht der physikalische Grenzbereich des Kraftfahrzeugs 1 vollständig ausgenutzt wird, sondern üblicherweise ein verkleinerter Kammscher Kreis berücksichtigt wird, um die zulässige Querbeschleunigung und somit die zulässigen Lenkwinkel zu ermitteln. Soll gleichzeitig mit dem Ausweichvorgang, also bei der Realisierung der Ausweichtrajektorie, auch ein Bremsvorgang erfolgen, ist dieser im Rahmen des Kammschen Kreises zu berücksichtigen; er kann jedoch in die Ermittlung des maximal zulässigen Lenkwinkels und des minimal zulässigen Lenkwinkels auch anderweitig eingehen. Wird, wie in den in Fig. 3 bis Fig. 6 dargestellten Beispielen, zunächst der maximal zulässige Lenkwinkel erreicht, ist bei Erreichen des minimal zulässigen Lenkwinkels die Geschwindigkeit aufgrund des Bremsvorgangs bereits kleiner, so dass der minimal zulässige Lenkwinkel vom Betrag her höher gewählt werden kann. Umgekehrt, wenn also der minimal zulässige Lenkwinkel zuerst erreicht wird, gilt dasselbe, nämlich dass der Betrag des maximal zulässigen Lenkwinkels ebenso entsprechend dem Bremsvorgang höher gewählt werden kann. Auch auf diese Art können asymmetrische Ausweichtrajektorien entstehen, jedoch werden dabei werden Umstände zur Bestimmung einer optimalen Ausweichtrajektorie mitberücksichtigt.

Dabei ist festzuhalten, dass die bestimmten maximal und minimal zulässigen Lenkwinkel hier nur den Startzustand wiedergeben, mithin eine erste Abschätzung darstellen, da die Querdynamik konkreter Trajektorien ja noch nicht bekannt ist. Vorliegend werden zur Initialisierung des Optimierungsverfahrens die extremal zulässigen Lenkwinkel aus der statischen Lösung des Fahrdynamikmodells, in der angenommen wird, dass eine konstante Kurvenfahrt vorliegt, bei der vorgegebenen maximalen Querbeschleunigung bestimmt und im folgenden iterativ mitoptimiert.

In jedem Fall gilt jedoch, dass sich die Zeitpunkte t2 (wobei hier wie gesagt auch der Winkelanteil durch den festen Zeitraum bis t3 zu berücksichtigen ist) sowie die Gesamtdauer des Zeitraums von t9 bis t12 aus den extremal zulässigen Lenkwinkeln bestimmen, nachdem im Beispiel der Fig. 3 bis Fig. 6 der Extremalwinkel 13 dem maximal zulässigen Lenkwinkel entsprechen sollte, der Extremalwinkel 14 dem minimal zulässigen Lenkwinkel. Entsprechend werden auch die Abstände der Zeitpunkte t5 bis t8 durch den maximal zulässigen Lenkwinkel und den minimal zulässigen Lenkwinkel vorgegeben.

Somit bleiben als freie Verlaufsparameter zunächst t4 und t9 übrig, die angeben, wie lange die extremal zulässigen Lenkwinkel gehalten werden sollen. t4 gemeinsam mit dem maximal zulässigen Lenkwinkel im Beispiel der Fig. 3 bis 6 bestimmt, welcher Querversatz erreicht wird. t9 ist im Beispiel der Fig. 3 bis 6 gemeinsam mit dem minimal zulässigen Lenkwinkel dafür verantwortlich, dass beim Zurücklenken eine parallele Ausrichtung des Kraftfahrzeugs 1 zur ursprünglichen Fahrzeugtrajektorie erzielt wird. Bei einem Ausweichmanöver in die andere Richtung sind die minimal und die maximal zulässigen Lenkwinkel selbstverständlich zu vertauschen.

Um die Verlaufsparameter zu vervollständigen, wird in einem Schritt 19 (vgl. Fig. 2) ein iteratives Optimierungsverfahren, insbesondere eine binäre Suche oder ein Newton-Verfahren, durchgeführt.

Es wird darauf hingewiesen, dass auch bezüglich der in der zu erreichenden Ausweichtrajektorie maximal und minimal zulässigen Lenkwinkel eine Optimierung stattfindet. Es werden für verschiedene Kombinationen des maximal zulässigen Lenkwinkels, des minimal zulässigen Lenkwinkels und von t4, t9 Lenkwinkeländerungsgeschwindigkeitsverläufe bestimmt. Um diese beurteilen zu können, muss die sich ergebende, zugehörige Testtrajektorie des Kraftfahrzeugs 1 ebenso bestimmt werden, was mit einem Fahrdynamikmodell geschieht, wobei vorliegend ein Einspur-Fahrdynamikmodell oder ein Zweispur-Fahrdynamikmodell verwendet wird. Ist ein Geschwindigkeitsverlauf mit vorgegeben, wird dieser selbstverständlich auch berücksichtigt. Resultat ist eine grundsätzlich fahrbare Testtrajektorie, die gegen Eignungskriterien ausgewertet werden kann, mithin bewertet wird. Wesentliche Eignungskriterien sind dabei im Schritt 19 ein die Einhaltung des Querversatzes 7 als Anpassungsparameter beschreibendes Eignungskriterium, ein Parallelitätskriterium, das sich auf die gewünschte Parallelität zwischen der Bewegung zu Beginn der Testtrajektorie und zum Ende der Testtrajektorie bezieht und die Einhaltung der Beschränkungen in der Querdynamik, beschrieben durch die zulässige Querbeschleunigung. Ein weiteres Eignungskriterium, das vorliegend betrachtet wird, ist die Schnelligkeit der Durchführung der Testtrajektorie, wobei danach gestrebt wird, die geeignete Ausweichtrajektorie aufzufinden, die den Ausweichvorgang am schnellsten abschließt. Insbesondere dann, wenn die Schnelligkeit ein Kriterium ist, oder wenn ein Grad der Einhaltung der Eignungskriterien ermittelt wird, kann eine Kostenfunktion definiert werden, die die verschiedenen Eignungskriterien entsprechend beinhaltet, wobei als Nebenbedingungen sichergestellt werden sollte, dass der Ausweicherfolg erzielt wird, mithin der Querversatz in jedem Fall erreicht wird, und die Querdynamik nicht die Möglichkeiten des Kraftfahrzeugs übersteigt.

In einem konkreten Beispiel kann also dann, wenn die maximal zulässige Querbeschleunigung überschritten ist, eine Reduzierung des maximal und/oder minimal zulässigen Lenkwinkels erfolgen; passt die Ausrichtung des Kraftfahrzeugs am Ende der Trajektorie nicht oder reicht der Querversatz nicht aus oder ist zu groß, kann eine Anpassung der extremal zulässigen Lenkwinkel sowie von t4 und t9 erfolgen. Wird festgestellt, dass man deutlich unterhalb der maximal zulässigen Querbeschleunigung liegt und der bisherige maximal bzw. minimal zulässige Lenkwinkel für eine Zeit >0s gehalten wird, können ggf. Haltezeiten reduziert werden und/oder die extremal zulässigen Lenkwinkel erhöht werden.

Als Ergebnis des Optimierungsverfahrens werden geeignete Verlaufsparameter für eine konkrete zu realisierende Ausweichtrajektorie 6 erhalten. Dann erfolgt in einem Schritt 20 gemäß Fig. 2 die Steuerung des Kraftfahrzeugs 1 gemäß des sich ergebenden Lenkwinkeländerungsgeschwindigkeitsverlaufs bzw. des daraus ermittelbaren Lenkwinkelverlaufs, wobei der Lenkaktor, der hier das Lenkrad bewegt, unmittelbar gemäß des entsprechenden Verlaufs angesteuert wird. Das Kraftfahrzeug 1 umfährt somit das Kollisionsobjekt 4.

Es sei noch darauf hingewiesen, dass dann, falls die durch die geeignete Verlaufsparameter beschriebene Trajektorie auch zu einer späteren Startzeit als der aktuellen Zeit in der aktuellen Situation noch ein erfolgreiches Ausweichen gewährleistet, es denkbar ist, eine Neuberechnung einer Ausweichtrajektorie mit zu einem komfortableren Ausweichen modifizierten Aktordynamikparameter durchgeführt wird. Auch bezüglich der Aktordynamikparameter ist mithin ein Spielraum gegeben, wenn ein zeitlicher Puffer existiert.

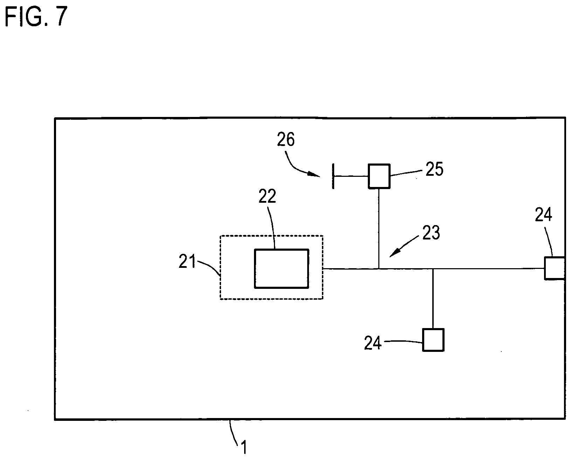

Fig. 7 zeigt schließlich eine Prinzipskizze des erfindungsgemäßen Kraftfahrzeugs 1. Wie bereits erwähnt, umfasst es das Sicherheitssystem 21 mit dem ihm zugeordneten Steuergerät 22, das zur Durchführung des erfindungsgemäßen Verfahrens ausgebildet ist. Über ein Bus-System 23 des Kraftfahrzeugs 1 kann das Steuergerät 22 Daten verschiedener Sensoren 24 für seine Berechnungen entgegennehmen und auch den Lenkaktor 25 ansteuern, der vorliegend am Lenkrad 26, dieses drehend, vorgesehen ist.

## Patentansprüche

1. Verfahren zum Betrieb eines Sicherheitssystems (21) eines Kraftfahrzeugs (1), welches bei Eintritt eines Ausweichkriteriums bezüglich eines Kollisionsobjekts (4) zur Ermittlung und Realisierung einer Ausweichtrajektorie (6) ausgebildet ist,
**dadurch gekennzeichnet,**
**dass** zur Ermittlung der Ausweichtrajektorie (6) ein durch Zeitpunkte beschreibende Verlaufsparameter parametrisierter vorgegebener Lenkwinkeländerungsgeschwindigkeitsverlauf (10, 10') und vorgegebene, die maximal realisierbare Dynamik eines genutzten Lenkaktors (25) beschreibende Aktordynamikparameter verwendet werden, woraus in Abhängigkeit wenigstens eines situationsabhängigen Anpassungsparameters die in der Situation einzusetzende Ausweichtrajektorie (6) durch Ermittlung geeigneter Verlaufsparameter bestimmt wird.

2. Verfahren nach Anspruch 1,
**dadurch gekennzeichnet,**
**dass** als wenigstens ein Anpassungsparameter ein maximal zulässiger Lenkwinkel und/oder ein minimal zulässiger Lenkwinkel und/oder wenigstens ein einen maximal zulässigen Lenkwinkel und einen minimal zulässigen Lenkwinkel beschreibender Anpassungsparameter, insbesondere eine aktuelle Geschwindigkeit und/oder ein Fahrbahnzustand, und/oder eine maximal zulässige Querbeschleunigung verwendet werden.

3. Verfahren nach Anspruch 2,
**dadurch gekennzeichnet,**
**dass** der maximal und/oder der minimal zulässige Lenkwinkel in Abhängigkeit der maximal zulässigen Querbeschleunigung ermittelt werden, bei Vorsehen eines Bremsvorgangs bei Ausführung der Ausweichtrajektorie (6) insbesondere mittels eines Kammschen Kreises.

4. Verfahren nach Anspruch 2 oder 3,
**dadurch gekennzeichnet,**
**dass** bei Vorsehen eines Bremsvorgangs bei Ausführung der Ausweichtrajektorie (6) der später im Verlauf der Ausweichtrajektorie (6) erreichte zulässige Lenkwinkel betragsmäßig höher als der früher im Verlauf der Ausweichtrajektorie (6) erreichte zulässige Lenkwinkel gewählt wird.

5. Verfahren nach einem der Ansprüche 2 bis 4,
**dadurch gekennzeichnet,**
**dass** eine S-förmige Ausweichtrajektorie (6) durch den Lenkwinkeländerungsgeschwindigkeitsverlauf (10, 10') beschrieben wird, indem in Abhängigkeit der Ausweichrichtung erst maximal schnell in die eine Richtung gelenkt wird, dort ein Extremalwinkel (13) gehalten wird, dann möglichst schnell in die andere Richtung gelenkt wird, dort ein anderer Extremalwinkel (14) gehalten wird und zurückgelenkt wird auf einen Endlenkwinkel (17), wobei wenigstens ein Teil der Verlaufsparameter so gewählt werden, dass die Extremalwinkel (13, 14) den maximal und minimal zulässigen Lenkwinkeln entsprechen.

6. Verfahren nach einem der vorangehenden Ansprüche,
**dadurch gekennzeichnet,**
**dass** als wenigstens ein Anpassungsparameter ein eine in der Situation vorliegende Kurvenfahrt beschreibender Kurvenfahrtparameter verwendet wird, insbesondere ein einen Kurvenradius und/oder einen Startlenkwinkel (18) und/oder einen Endlenkwinkel (17) beschreibender Parameter.

7. Verfahren nach einem der vorangehenden Ansprüche,
**dadurch gekennzeichnet,**
**dass** wenigstens ein Anpassungsparameter, insbesondere ein gewünschter Querversatz (7) durch die Ausweichtrajektorie (6), in Abhängigkeit von die relative Position des Kollisionsobjekts (4) zu dem Kraftfahrzeug (1) und/oder die Ausdehnung des Kollisionsobjekts (4) beschreibenden Umfelddaten ermittelt wird.

8. Verfahren nach einem der vorangehenden Ansprüche,
**dadurch gekennzeichnet,**
**dass** zur Ermittlung der geeigneten Verlaufsparameter, insbesondere im Rahmen eines Optimierungsverfahrens, für verschiedene Testwerte von Verlaufsparametern unter Verwendung eines Fahrdynamikmodells Testtrajektorien aus dem Lenkwinkeländerungsgeschwindigkeitsverlauf (10, 10') ermittelt und anhand wenigstens eines Eignungskriteriums bewertet werden.

9. Verfahren nach Anspruch 8,
**dadurch gekennzeichnet,**
**dass** wenigstens ein Teil der Anpassungsparameter und/oder daraus abgeleiteter Parameter, aus denen Verlaufsparameter berechnet werden, zur Erzeugung unterschiedlicher Testwerte variiert werden und/oder wenigstens ein Eignungskriterium das Einhalten wenigstens eines Anpassungsparameters und/oder wenigstens ein Eignungskriterium eine möglichst schnelle Ausführung der Ausweichtrajektorie (6) betrifft.

10. Verfahren nach Anspruch 8 oder 9,
**dadurch gekennzeichnet,**
**dass** als Eignungskriterien das Erreichen eines gewünschten Querversatzes (7) und/oder eine größtmögliche Parallelität des Endes der Ausweichtrajektorie (6) zum Beginn der Ausweichtrajektorie (6) und/oder das Nichtüberschreiten einer maximal zulässigen Querbeschleunigung und/oder das Erreichen eines bestimmten Endlenkwinkels (17) am Ende der Ausweichtrajektorie (6), insbesondere bei einer Kurvenfahrt, verwendet werden.

11. Verfahren nach einem der Ansprüche 8 bis 10,
**dadurch gekennzeichnet,**
**dass** bei Verwendung einer insbesondere S-förmigen, einen maximal und einen minimal zulässigen Lenkwinkel für einen Zeitraum haltenden Ausweichtrajektorie (6) die die Länge der Zeiträume definierenden Verlaufsparameter zum Einhalten eines in Abhängigkeit von die relative Position des Kollisionsobjekts (4) zu dem Kraftfahrzeug (1) und/oder die Ausdehnung des Kollisionsobjekts (6) beschreibenden Umfelddaten ermittelten Anpassungsparameters, insbesondere eines Querversatzes (7), und zum Erreichen einer größtmögliche Parallelität des Endes der Ausweichtrajektorie (6) zum Beginn der Ausweichtrajektorie (6) bestimmt werden.

12. Verfahren nach einem der Ansprüche 8 bis 11,
**dadurch gekennzeichnet,**
**dass** ein Einspur- oder ein Zweispur-Fahrdynamikmodell verwendet wird.

13. Verfahren nach einem der Ansprüche 8 bis 12,
**dadurch gekennzeichnet,**
**dass** ein iteratives Optimierungsverfahren bezüglich des wenigstens einen Eignungskriteriums zur Ermittlung der geeigneten Verlaufsparameter durchgeführt wird, insbesondere eine binäre Suche und/oder ein Newton-Verfahren.

14. Verfahren nach einem der vorangehenden Ansprüche,
**dadurch gekennzeichnet,**
**dass**, falls die durch die geeigneten Verlaufsparameter beschriebene Ausweichtrajektorie (6) auch zu einer späteren Startzeit als der aktuellen Zeit in der Situation noch ein erfolgreiches Ausweichen gewährleistet, eine Neuberechnung einer Ausweichtrajektorie (6) mit zu einem komfortableren Ausweichen modifizierten Aktordynamikparametern durchgeführt wird.

15. Verfahren nach einem der vorangehenden Ansprüche,
**dadurch gekennzeichnet,**
**dass** die Ausweichtrajektorie einen einen Endlenkwinkel (17) über einen Zeitraum haltenden Endabschnitt aufweist.

16. Verfahren nach einem der vorangehenden Ansprüche,
**dadurch gekennzeichnet,**
**dass** eine Mehrzahl von Ausweichtrajektorien (6) beschreibenden Verlaufsparametern für Anpassungsparameter bestimmter Situationen vorausberechnet und gespeichert werden, wobei bei Eintritt des Ausweichkriteriums Verlaufsparameter für die der aktuellen Situation zugeordneten Anpassungsparameter aus den gespeicherten Verlaufsparametern ermittelt werden.

17. Verfahren nach einem der vorangehenden Ansprüche,
**dadurch gekennzeichnet,**
**dass** zur Realisierung der Ausweichtrajektorie der Lenkaktor (25) gemäß des Lenkwinkeländerungsgeschwindigkeitsverlauf (10, 10') oder eines daraus abgeleiteten Lenkwinkelverlaufs (12, 12') angesteuert wird.

18. Verfahren nach einem der vorangehenden Ansprüche,
**dadurch gekennzeichnet,**
**dass** als Aktordynamikparameter eine maximale Lenkwinkeländerungsgeschwindigkeit und eine maximale Lenkwinkeländerungsbeschleunigung verwendet werden.

19. Verfahren nach einem der vorangehenden Ansprüche,
**dadurch gekennzeichnet,**
**dass** die Aktordynamikparameter aus Fahrversuchen und/oder Simulationen und/oder theoretischen Berechnungen ermittelt und vorgegeben werden.

20. Verfahren nach einem der vorangehenden Ansprüche,
**dadurch gekennzeichnet,**
**dass** bei einem durch den Lenkaktor (25) drehbaren Lenkrad (26) ein Widerstand durch am Lenkrad (26) befindliche Hände eines Fahrers bei der Ermittlung der vorzugebenden Aktordynamikparameter berücksichtigt wird.

21. Kraftfahrzeug (1), umfassend ein Sicherheitssystem (21) mit einem zur Durchführung eines Verfahrens nach einem der vorangehenden Ansprüche ausgebildeten Steuergerät (22).

## Claims

1. Method for operating a security system (21) of a motor vehicle (1) which is configured to determine and implement a deviating trajectory (6) when a deviating criterion occurs in relation to a collision object (4),
**characterised in that**
in order to determine the deviating trajectory (6), a predefined steering angle change velocity curve (10, 10') parameterised by course parameters describing time points and predefined actuator dynamic parameters describing the maximum implementable dynamic of a used steering actuator (25) are used, from which the deviating trajectory (6) to be used in the situation is determined by determining suitable course parameters depending on at least one situation-dependent adaptation parameter.

2. Method according to claim 1,
**characterised in that**
a maximum permissible steering angle and/or a minimum permissible steering angle and/or at least one adaptation parameter describing a maximum permissible steering angle and a minimum permissible steering angle, in particular a current speed and/or a road condition and/or a maximum permissible lateral acceleration are used as the at least one adaptation parameter.

3. Method according to claim 2,
**characterised in that**
the maximum and/or the minimum permissible steering angle are determined depending on the maximum permissible lateral acceleration, when providing a brake operation upon implementing the deviating trajectory (6), in particular by means of a Kamm circle.

4. Method according to claim 2 or 3,
**characterised in that**
when providing a brake operation upon implementing the deviating trajectory (6) the permissible steering angle subsequently achieved in the course of the deviating trajectory (6) is selected to be higher according to amount than the permissible steering angle achieved earlier in the course of the deviating trajectory (6).

5. Method according to any one of claims 2 to 4,
**characterised in that**
an S-shaped deviating trajectory (6) is described by the steering angle change velocity curve (10, 10') by steering firstly taking place at maximum speed in one direction depending on the deviating direction, where an extreme angle (13) is maintained, then steering takes place at maximum speed in the other direction, where another extreme angle (14) is maintained and steering takes place back to an end steering angle (17) wherein at least one part of the course parameters is selected such that the extreme angles (13, 14) correspond to the maximum and minimum permissible steering angles.

6. Method according to any one of the preceding claims,
**characterised in that**
a cornering parameter describing a turn present in the situation is used as the at least one adaptation parameter, in particular a parameter describing a cornering radius and/or a starting steering angle (18) and/or an end steering angle (17).

7. Method according to any one of the preceding claims,
**characterised in that**
at least one adaptation parameter, in particular a desired lateral displacement (7) is determined by environmental data describing the deviating trajectory (6), depending on the relative position of the collision object (4) to the motor vehicle (1) and/or the extension of the collision object (4).

8. Method according to any one of the preceding claims,
**characterised in that**
in order to determine the suitable course parameters, in particular in the context of an optimisation process, test trajectories are determined from the steering angle change velocity curve (10, 10') for different test values of course parameters using a driving dynamic model and are assessed based on at least one suitability criterion.

9. Method according to claim 8,
**characterised in that**
at least one part of the adaptation parameters and/or parameters derived therefrom, from which course parameters are calculated, are varied to generate different test values and/or at least one suitability criterion relates to maintaining at least one adaptation parameter and/or at least one suitability criterion relates to a fastest possible implementation of the deviating trajectory (6).

10. Method according to claim 8 or 9,
**characterised in that**
achieving a desired lateral displacement (7) and/or a greatest possible parallelism of the end of the deviating trajectory (6) to the beginning of the deviating trajectory (6) and/or not exceeding a maximum permissible lateral acceleration and/or achieving a determined end steering angle (17) at the end of the deviating trajectory (6), in particular in the case of cornering, are used as suitability criteria.

11. Method according to any one of claims 8 to 10,
**characterised in that**
when an in particular S-shaped deviating trajectory (6) is used which maintains a maximum and a minimum permissible steering angle for a period of time, the course parameters defining the length of the time periods are determined in order to maintain an adaptation parameter determined depending on environmental data describing the relative position of the collision object (4) to the motor vehicle (1) and/or the extension of the collision object (6), in particular a lateral displacement (7) and in order to achieve a greatest possible parallelism of the end of the deviating trajectory (6) to the beginning of the deviating trajectory (6).

12. Method according to any one of claims 8 to 11,
**characterised in that**
a single lane or a two lane driving dynamic model is used.

13. Method according to any one of claims 8 to 12,
**characterised in that**
an iterative optimisation process in relation to the at least one suitability criterion is carried out to determine the suitable course parameters, in particular a binary search and/or Newton's method.

14. Method according to any one of the preceding claims,
**characterised in that**
if the deviating trajectory (6) described by the suitable course parameters still ensures a successful deviation even at a later starting time than the current time in the situation, a recalculation of a deviating trajectory (6) is carried out with actuator dynamic parameters modified to a comfortable deviation.

15. Method according to any one of the preceding claims,
**characterised in that**
the deviating trajectory has an end section maintaining an end steering angle (17) for a period of time.

16. Method according to any one of the preceding claims,
**characterised in that**
a plurality of course parameters describing deviating trajectories (6) are anticipated and stored for adaptation parameters of certain situations, wherein course parameters are determined for the adaptation parameters assigned to the current situation from the stored course parameters when the deviating criterion occurs.

17. Method according to any one of the preceding claims,
**characterised in that**
in order to implement the deviating trajectory, the steering actuator (25) is actuated in accordance with the steering angle change velocity curve (10, 10') or a steering angle curve (12, 12') derived therefrom.

18. Method according to any one of the preceding claims,
**characterised in that**
a maximum steering angle change velocity and a maximum steering angle change acceleration are used as the actuator dynamic parameters.

19. Method according to any one of the preceding claims,
**characterised in that**
the actuator dynamic parameters are determined and predefined from test drives and/or simulations and/or theoretic calculations.

20. Method according to any one of the preceding claims,
**characterised in that**
in the case of a steering wheel (26) rotatable by the steering actuator (25), a resistance by the hands of a driver located on the steering wheel (26) is considered when determining the actuator dynamic parameters to be preset.

21. Motor vehicle (1), comprising a security system (21) having a control device (22) configured for carrying out a method according to any one of the preceding claims.

## Revendications

1. Procédé de fonctionnement d'un système de sécurité (21) d'un véhicule automobile (1), lequel système de sécurité est conçu pour déterminer et réaliser une trajectoire d'évitement (6) en présence d'un critère d'évitement concernant un objet de collision (4),
**caractérisé en ce que**, pour déterminer la trajectoire d'évitement (6), on utilise une courbe de vitesse de variation d'angle de braquage (10, 10') prédéterminée paramétrée par des paramètres de courbe décrivant des instants et on utilise des paramètres de dynamique d'actionneur prédéterminés décrivant la dynamique maximale réalisable d'un actionneur de direction (25) utilisé, la trajectoire d'évitement (6) à mettre en oeuvre dans la situation considérée étant déterminée à partir de là en déterminant des paramètres de courbe appropriés en fonction d'au moins un paramètre d'adaptation dépendant de la situation.

2. Procédé selon la revendication 1, **caractérisé en ce que**, comme paramètre(s) d'adaptation, on utilise un angle de braquage maximal autorisé et/ou un angle de braquage minimal autorisé et/ou au moins un paramètre d'adaptation décrivant un angle de braquage maximal autorisé et un angle de braquage minimal autorisé, en particulier une vitesse actuelle et/ou un état de la chaussée et/ou une accélération transversale maximale autorisée.

3. Procédé selon la revendication 2, **caractérisé en ce que** l'angle de braquage maximal autorisé et/ou l'angle de braquage minimal autorisé sont déterminés en fonction de l'accélération transversale maximale autorisée, en prévoyant une opération de freinage lors de l'exécution de la trajectoire d'évitement (6), en particulier au moyen d'un cercle de Kamm.

4. Procédé selon la revendication 2 ou 3, **caractérisé en ce que**, en prévoyant une opération de freinage lors de l'exécution de la trajectoire d'évitement (6), l'angle de braquage autorisé atteint postérieurement au cours de la trajectoire d'évitement (6) est choisi plus grand en valeur absolue que l'angle de braquage autorisé atteint antérieurement au cours de la trajectoire d'évitement (6).

5. Procédé selon l'une des revendications 2 à 4, **caractérisé en ce qu'**une trajectoire d'évitement (6) en forme de S est décrite par la courbe de vitesse de variation d'angle de braquage (10, 10'), à savoir que, en fonction de la direction d'évitement, on braque d'abord le plus vite possible dans une première direction, on maintient là un angle extrêmal (13), puis on braque le plus vite possible dans l'autre direction, on maintient là un autre angle extrêmal (14) et on revient à un angle de braquage final (17), au moins une partie des paramètres de courbe étant choisie de telle sorte que les angles extrêmaux (13, 14) correspondent aux angles de braquage maximal et minimal autorisés.

6. Procédé selon l'une des revendications précédentes, **caractérisé en ce que**, comme paramètre(s) d'adaptation, on utilise un paramètre de conduite en virage décrivant une conduite en virage présente dans la situation considérée, en particulier un paramètre décrivant un rayon de courbure et/ou un angle de braquage initial (18) et/ou un angle de braquage final (17).

7. Procédé selon l'une des revendications précédentes, **caractérisé en ce qu'**au moins un paramètre d'adaptation, en particulier un déport transversal souhaité (7) par la trajectoire d'évitement (6), est déterminé en fonction de données d'environnement décrivant la position relative de l'objet de collision (4) par rapport au véhicule automobile (1) et/ou la dimension de l'objet de collision (4).

8. Procédé selon l'une des revendications précédentes, **caractérisé en ce que**, afin de déterminer les paramètres de courbe appropriés, en particulier dans le cadre d'un procédé d'optimisation, on détermine des trajectoires de test pour différentes valeurs de test de paramètres de courbe, en utilisant un modèle de dynamique de conduite et à partir de la courbe de vitesse de variation d'angle de braquage (10, 10'), et on les évalue à l'aide d'au moins un critère d'aptitude.

9. Procédé selon la revendication 8, **caractérisé en ce qu'**au moins une partie des paramètres d'adaptation et/ou de paramètres déduits de ceux-ci, à partir desquels des paramètres de courbe sont calculés, sont modifiés pour produire différentes valeurs de test et/ou au moins un critère d'aptitude concerne le respect d'au moins un paramètre d'adaptation et/ou au moins un critère d'aptitude concerne l'exécution la plus rapide possible de la trajectoire d'évitement (6).

10. Procédé selon la revendication 8 ou 9, **caractérisé en ce que**, comme critère d'aptitude, on utilise le fait qu'un déport transversal souhaité (7) est atteint et/ou le fait que la fin de la trajectoire d'évitement (6) est le plus parallèle possible au début de la trajectoire d'évitement (6) et/ou le fait qu'une accélération transversale maximale autorisée n'est pas dépassée et/ou le fait qu'un certain angle de braquage final (17) est atteint à la fin de la trajectoire d'évitement (6), en particulier lors d'une conduite en virage.

11. Procédé selon l'une des revendications 8 à 10, **caractérisé en ce que**, lors de l'utilisation d'une trajectoire d'évitement (6) qui est en particulier en forme de S et qui maintient un angle de braquage maximal autorisé et un angle de braquage minimal autorisé pendant un intervalle de temps, les paramètres de courbe définissant la longueur des intervalles de temps sont déterminés afin de respecter un paramètre d'adaptation, déterminé en fonction de données d'environnement décrivant la position relative de l'objet de collision (4) par rapport au véhicule automobile (1) et/ou la dimension de l'objet de collision (6), en particulier un déport transversal (7), et afin d'atteindre le plus grand parallélisme possible entre la fin de la trajectoire d'évitement (6) et le début de la trajectoire d'évitement (6).

12. Procédé selon l'une des revendications 8 à 11, **caractérisé en ce qu'**on utilise un modèle de dynamique de conduite à une voie ou à deux voies.

13. Procédé selon l'une des revendications 8 à 12, **caractérisé en ce qu'**on met en oeuvre un procédé d'optimisation itératif concernant l'au moins un critère d'aptitude en vue de la détermination des paramètres de courbe appropriés, en particulier une recherche binaire et/ou un procédé de Newton.

14. Procédé selon l'une des revendications précédentes, **caractérisé en ce que**, si la trajectoire d'évitement (6) décrite par les paramètres de courbe appropriés garantit encore un évitement réussi à un instant de début postérieur à l'instant actuel dans la situation considérée, on effectue un nouveau calcul d'une trajectoire d'évitement (6) avec des paramètres de dynamique d'actionneur modifiés en vue d'un évitement plus confortable.

15. Procédé selon l'une des revendications précédentes, **caractérisé en ce que** la trajectoire d'évitement comporte un tronçon final qui maintient un angle de braquage final (17) pendant un intervalle de temps.

16. Procédé selon l'une des revendications précédentes, **caractérisé en ce qu'**on calcule au préalable et on mémorise une multiplicité de paramètres de courbe décrivant des trajectoires d'évitement (6) pour des paramètres d'adaptation de situations déterminées, des paramètres de courbe pour les paramètres d'adaptation associés à la situation actuelle étant alors déterminés à l'apparition du critère d'évitement à partir des paramètres de courbe mémorisés.

17. Procédé selon l'une des revendications précédentes, **caractérisé en ce que**, pour réaliser la trajectoire d'évitement, on commande l'actionneur de direction (25) selon la courbe de vitesse de variation d'angle de braquage (10, 10') ou selon une courbe d'angle de braquage (12, 12') déduite de celle-ci.

18. Procédé selon l'une des revendications précédentes, **caractérisé en ce que**, comme paramètre de dynamique d'actionneur, on utilise une vitesse maximale de variation d'angle de braquage et une accélération maximale de variation d'angle de braquage.

19. Procédé selon l'une des revendications précédentes, **caractérisé en ce qu'**on détermine et prescrit les paramètres de dynamique d'actionneur à partir de tests de conduite et/ou de simulations et/ou de calculs théoriques.

20. Procédé selon l'une des revendications précédentes, **caractérisé en ce que**, dans le cas d'un volant de direction (26) qui peut être tourné par l'actionneur de direction (25), on prend en compte lors de la détermination des paramètres de dynamique d'actionneur à prescrire une résistance due aux mains d'un conducteur placées sur le volant de direction (26).

21. Véhicule automobile (1), comprenant un système de sécurité (21) avec un appareil de commande (22) conçu pour la mise en oeuvre d'un procédé selon l'une des revendications précédentes.
